(19) Europäisches Patentamt / European Patent Office / Office européen des brevets

(11) EP 3 975 149 A2

## (12) DEMANDE DE BREVET EUROPEEN

(43) Date de publication:
**30.03.2022 Bulletin 2022/13**

(21) Numéro de dépôt: **21197833.3**

(22) Date de dépôt: **20.09.2021**

(51) Classification Internationale des Brevets (IPC):
**G08B 21/20** (2006.01)    **G01R 31/08** (2020.01)
**G01M 3/16** (2006.01)

(52) Classification Coopérative des Brevets (CPC):
**G08B 21/20; G01M 3/165;** G08B 25/018

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **24.09.2020 FR 2009714**

(71) Demandeurs:
• **SAINT-GOBAIN ISOVER
92400 Courbevoie (FR)**

• **SAINT-GOBAIN PLACO
92400 Courbevoie (FR)**

(72) Inventeur: CHAUVIN, David
**75005 PARIS (FR)**

(74) Mandataire: **Saint-Gobain Recherche
Département Propriété Industrielle
39 Quai Lucien Lefranc
93300 Aubervilliers (FR)**

## (54) SYSTÈME ET MÉTHODE DE DÉTECTION DE SINISTRES DANS LES BÂTIMENTS

(57) La présente invention concerne un système de détection de sinistres, tels des fuites d'eau, qui comporte un premier et un second élément conducteur, chaque élément conducteur comprenant une portion principale à partir de laquelle au moins deux branches s'étendent, le nombre de branche étant identiques entre le premier élément et le second élément conducteur, les éléments conducteurs étant agencés pour que les branches du premier élément conducteur et les branches du second élément conducteur soient parallèles entre elles, caractérisé en ce que le premier élément conducteur est alimenté électriquement par un dispositif électronique, le dispositif électronique étant apte à mesurer la tension du second conducteur.

[Fig. 2]

EP 3 975 149 A2

## Description

## DOMAINE TECHNIQUE DE L'INVENTION

La présente invention est relative au domaine des systèmes de détection de sinistres dans les bâtiments.

## ARRIERE PLAN TECHNOLOGIQUE

Actuellement, il est connu des systèmes de détection de sinistres comme des détecteurs de fumées utilisés pour la détection de départ de feu.
Toutefois, il existe un besoin pour une détection d'autres types de sinistres, notamment des sinistres du type fuite d'eau ou infiltration d'eau qui conduisent à la présence d'eau liquide à l'intérieur de la structure du bâtiment.

Il existe des systèmes de détection de fuites d'eau comportant au moins deux éléments conducteurs longiformes disposés parallèlement et s'étendant entre une première extrémité et une deuxième extrémité. Un premier élément conducteur est alimenté électriquement par un dispositif électronique avec une tension V1. Le dispositif électronique est apte à mesurer la tension sur le second élément conducteur longiforme.

Ces éléments conducteurs sont agencés directement sur une paroi ou sur un support, perméable, lui-même fixé à une paroi.

En cas de fuite d'eau, l'eau va pénétrer à l'intérieur de la paroi, voir au niveau du support sur lequel les éléments conducteurs sont agencés. L'écartement des éléments conducteurs est tel que la ou les gouttes d'eau vont faire conduction entre les deux éléments conducteurs. Ainsi, la tension V1 du premier élément conducteur sera transmise au second élément conducteur qui voit sa tension varier. Le dispositif électronique détecte donc un sinistre.

Toutefois, un tel système ne permet pas une localisation précise de la fuite ce qui implique qu'il faut cherche le long du système de détection pour la trouver.

Une solution pour localiser la fuite est de multiplier le nombre de systèmes de détection pour quadriller la paroi/surface et ainsi mieux localiser la fuite.

Une autre solution consiste à avoir un système de détection comprenant une pluralité d'éléments conducteurs s'étendant parallèlement de façon horizontale et une pluralité d'éléments conducteurs s'étendant parallèlement de façon verticale. Par exemple, les éléments conducteurs s'étendant de façon horizontale sont alimentés par le dispositif électronique et le dispositif électronique mesure la tension des éléments conducteurs s'étendant de façon verticale. Ainsi, en cas de fuite d'eau, il est possible d'avoir sa localisation. Néanmoins, un tel système est complexe à mettre en place.

## RESUME DE L'INVENTION

La présente invention se propose donc de résoudre ces inconvénients en fournissant un système de détection capable de détecter un sinistre tel une fuite d'eau sur une plus grande surface tout en étant capable de localiser ce sinistre.

A cet effet, l'invention concerne un système de détection de présence d'eau liquide qui comporte un premier et un second élément conducteur, chaque élément conducteur comprenant une portion principale à partir de laquelle au moins deux branches s'étendent, le nombre de branches étant identique entre le premier élément et le second élément conducteur, les éléments conducteurs étant agencés pour que les branches du premier élément conducteur et les branches du second élément conducteur soient parallèles entre elles, caractérisé en ce que le premier élément conducteur est alimenté électriquement par un dispositif électronique, le dispositif électronique étant apte à mesurer la tension du second conducteur.

Selon un exemple, le premier élément et le second élément conducteur ont la même résistance par mètre, la portion principale du second conducteur comprenant, entre chaque branche, une résistance Ri.

Selon un exemple, le premier élément et le second élément conducteur ont une résistance par mètre différente.

Selon un exemple, la résistance par mètre ($p1$) du premier élément conducteur et la résistance par mètre ($p2$) du second élément conducteur ont une valeur telle que l'inéquation suivante est vérifiée :

$$p1 \geq p2 \times ((D + \Delta L)/ (D - \Delta L))$$

Avec $p1$ la résistance par mètre ($\Omega/m$) du premier conducteur, $p2$ la résistance par mètre ($\Omega/m$) du second élément conducteur, D la hauteur des branches secondaires et $\Delta L$ la distance entre deux branches secondaires du même élément conducteur.

Selon un exemple, la valeur des résistances Ri résout la formule suivante :

$$Ri > 2 \times p1 \times Lmax$$

Avec $p1$ la résistance par mètre électrique ($\Omega/m$) des éléments conducteurs et Lmax la distance maximale des branches secondaires, ces résistances Ri ayant toutes la même valeur.

Selon un exemple, la portion principale du premier élément conducteur comprend un premier segment connecté au dispositif électronique et s'étendant parallèlement à la portion principale du second élément conducteur, un second segment s'étendant parallèlement à la branche secondaire du second élément conducteur la plus éloignée du dispositif électronique et utilisée comme branche secondaire du premier élément conducteur la plus éloignée du dispositif électronique et un troisième segment s'étendant parallèlement au premier segment, les branches secondaires du premier élément conducteur s'étendant depuis ledit troisième segment.

Selon un exemple, le système de détection comprend des bandes isolantes agencées sur le premier élément conducteur en regard des extrémités des branches secondaires du second élément conducteur.

L'invention concerne en outre un système de détection de sinistres, tels des fuites d'eau, qui comporte un premier et un second élément conducteur s'étendant parallèlement selon une première direction et une seconde direction perpendiculaire à la premier direction, caractérisé en ce que le premier élément conducteur est alimenté électriquement par un dispositif électronique, le dispositif électronique étant apte à mesurer la tension du second élément conducteur.

Selon un exemple, le premier élément conducteur et le second élément conducteur sont agencés sur un support.

Selon un exemple, le support est découpable selon la position et l'agencement du premier et du second élément conducteur.

Selon un exemple, ledit support comprend au moins une membrane ou une plaque sur laquelle le premier élément conducteur et le second élément conducteur sont agencés.

Selon un exemple, ledit support comprend deux membranes entre lesquelles le premier élément conducteur et le second élément conducteur sont agencés.

Selon un exemple, au moins une membrane comprend une feuille ou un feuillet de feuilles.

Selon un exemple, chaque membrane comprend une feuille ou un feuillet de feuilles.

Selon un exemple, au moins une membrane est perméable à l'eau.

L'invention concerne en outre une méthode de détection de la présence d'eau liquide dans un bâtiment équipé d'un système de détection selon l'invention, caractérisée en ce qu'elle consiste à détecter une augmentation de potentiel dans le second élément conducteur.

L'invention concerne en outre une méthode de détection de la présence d'eau liquide dans un bâtiment équipé d'un système de détection selon l'invention, caractérisée en ce qu'elle comprend une étape de localisation consistant à, par l'intermédiaire du dispositif électronique, à déterminer une résistance à partir de la tension mesurée, ledit dispositif électronique étant apte à faire des calculs en utilisant ladite résistance mesurée et la résistance par mètre de chaque élément conducteur pour aboutir à une longueur représentative de la localisation.

L'invention concerne en outre une méthode de détection d'une fuite d'eau dans un bâtiment équipé d'un système de détection, caractérisée en ce qu'elle comprend une étape de localisation consistant, par l'intermédiaire du dispositif électronique, à déterminer une résistance à partir de la tension mesurée, cette résistance étant décomposée entre une première partie dont la valeur est égale à un multiple de la valeur de la résistance Ri et une seconde partie dont la valeur dépend de la résistance par mètre des branches secondaires, ledit dispositif électronique étant apte à faire des calculs en utilisant ladite résistance mesurée, la valeur de la résistance Ri et la résistance par mètre de chaque élément conducteur pour aboutir à une longueur représentative de la localisation.

Selon un exemple, la première partie de la résistance issue de la tension mesurée est représentative de la branche secondaire sur laquelle la fuite est détectée, la seconde partie étant représentative de la position sur la branche secondaire.

L'invention concerne en outre un programme d'ordinateur comportant des instructions pour l'exécution de tout ou partie des étapes d'une méthode selon l'invention lorsque ledit programme est exécuté par un ordinateur.

## DESCRIPTION DES FIGURES

D'autres particularités et avantages ressortiront clairement de la description qui en est faite ci-après, à titre indicatif et nullement limitatif, en référence aux dessins annexés, dans lesquels:

- la fig. 1 est une représentation schématique d'un dispositif de détection selon un premier mode de réalisation de l'invention;
- les fig. 2 à 5 sont des représentations schématiques d'un dispositif de détection selon un second mode de réalisation de l'invention et de ses variantes ;
- les fig. 6 à 9 et 12 sont des représentations schématiques d'un dispositif de détection selon un troisième mode de réalisation de l'invention et de ses variantes ;
- les fig. 10 et 11 sont des représentations schématiques d'un dispositif de détection selon l'invention agencé sur un support ;
- la fig. 13 est une représentation schématique d'un pont diviseur de tension utilisable dans le dispositif de détection selon l'invention;

## DESCRIPTION DETAILLEE

L'invention porte sur une paroi qui au moins un système de détection D selon l'invention. Cette paroi est positionnée verticalement dans le cas de mur ou cloison ou dans le cas d'une toiture, horizontalement ou inclinée. Ce système de détection D comprend un dispositif électronique 3 et des éléments conducteurs. Ces éléments conducteurs peuvent être des fils métalliques comme, par exemple, en étain ou en cuivre ou inox.

Dans une variante, les éléments conducteurs sont des bandelettes en papier ou carton comportant une matière conductrice. Les bandelettes peuvent être enduites ou imprégnées d'une matière conductrice, par exemple du carbone. Ces éléments conducteurs peuvent également se présenter sous la forme d'une encre ou d'une pate conductrice qui serait appliquée par impression, impression à jet ou sérigraphie.

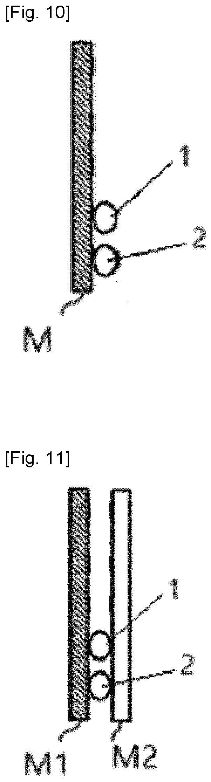

Ces éléments conducteurs sont, préférentiellement, agencés sur un support S. Ce support peut se présenter sous la forme d'une membrane M réalisée dans un matériau perméable (qui absorbe l'eau) ou imperméable à l'eau ou à la vapeur d'eau ou sous la forme d'une plaque, cette plaque pouvant être en plâtre ou autres (par exemple carton) comme visible à la figure 10. Le support S peut aussi se présenter sous la forme d'une première membrane M1 et d'une seconde membrane M2. La première membrane M1 est réalisée dans un matériau perméable alors que la seconde membrane M2 est réalisée dans un matériau perméable ou imperméable. La seconde membrane M2 comprend une feuille ou un feuillet de feuilles. Les deux éléments conducteurs sont agencés entre la première membrane M1 et la seconde membrane M2 comme visible à la figure 11. Le matériau de la membrane M peut, par exemple, être sous la forme d'un polymère, un feuillet de polymères, du papier kraft, du voile de verre non tissé, du carton etc.

Dans le cas d'un support S avec une seule membrane M, ce support S est installé sur la paroi de plusieurs façons. Soit la membrane M est perméable et ladite membrane M se trouve en contact de la paroi ou la membrane M est imperméable et ce sont les éléments conducteurs qui sont en contact de la paroi.

Dans le cas d'un support S avec une première membrane M1 et une seconde membrane M2, il est agencé pour que la première membrane M1, perméable, soit en contact de la paroi.

Dans le cas d'une plaque, par exemple, de plâtre, les éléments conducteurs sont agencés sur l'une des faces de la plaque de plâtre. Cette face portant les éléments conducteurs est agencée pour que les éléments conducteurs soient en regard ou non de la paroi sur laquelle la plaque est fixée.

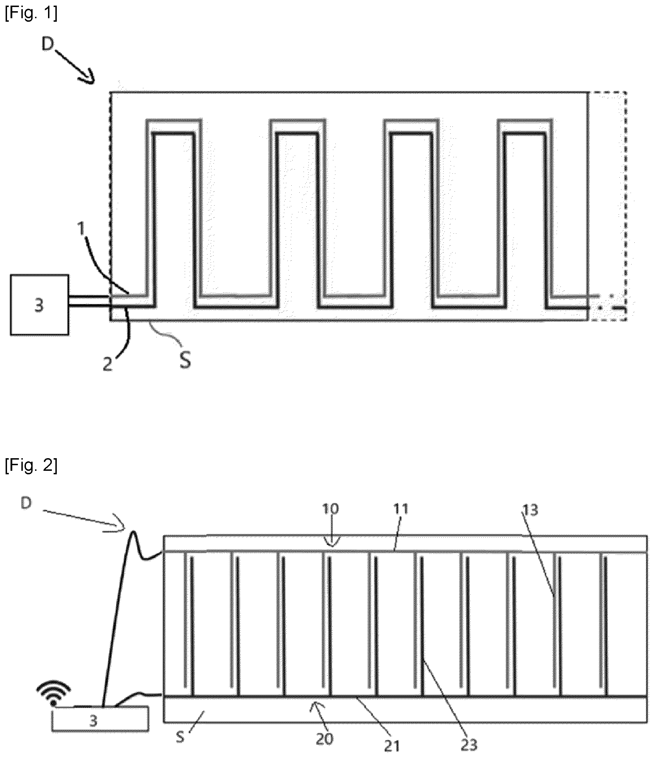

Dans un premier mode réalisation visible à la figure 1, le système de détection D comprend deux éléments conducteurs : un premier élément conducteur 1 et un second élément conducteur 2. Ces éléments conducteurs 1, 2 sont agencés pour s'étendre parallèlement. Ces éléments conducteurs 1, 2 ont une forme en créneau. Une telle forme permet d'avoir des éléments conducteurs 1, 2 qui s'étendent selon une première direction et une seconde direction. Dans notre cas d'un système de détection D pour une paroi, la première direction est une direction parallèle au plan du sol alors que la seconde direction est une direction orthogonale au plan du sol.

Dans ce premier mode de réalisation, les deux éléments conducteurs 1, 2 ont une résistance par mètre ($\Omega$ /m) qui peut être identique ou différente.

L'écartement entre les deux éléments conducteurs 1, 2 est comprise entre 0.5 et 15 cm.

Le fonctionnement de ce premier mode de réalisation consiste à envoyer une tension, par exemple de 5V, dans un premier élément conducteur 1 via le dispositif électronique 3. En temps normal, une tension non nulle est mesurée dans ce premier élément conducteur 1 et une tension nulle (ou quasi nulle) est mesurée dans le second élément conducteur 2. Ces mesures de tension sont réalisées, dans l'invention, par rapport à la masse du dispositif électronique 3.

En cas de sinistre de type fuite d'eau, l'eau va pénétrer à l'intérieur de la paroi supportant le système de détection D. Comme les éléments conducteurs, de conduction 1,2 sont en contact direct ou indirect (via une feuille qui absorbe l'eau) avec la paroi, alors l'eau va, sous forme de gouttes d'eau, s'insérer entre les deux éléments conducteurs 1, 2. L'absorption d'eau via la membrane M absorbante va entrainer l'apparition d'une conduction électrique entre les deux éléments conducteurs 1, 2.

Cette conduction entraine le passage du courant du premier élément conducteur 1 alimenté par une tension non nulle vers le second élément conducteur 2 qui est normalement non alimenté par une tension électrique.

Le dispositif électronique 3 auquel le second élément conducteur 2 est connecté reçoit alors une tension. Cette tension est mesurée par le dispositif électronique 3 et traitée pour fournir une information. Le dispositif électronique 3 est munie d'une unité de calcul (non représentée) pour effectuer ce traitement des mesures de tension. Le dispositif électronique 3 peut alors comprendre un programme d'ordinateur permettant d'exécuter la détection.

En temps normal, la tension est nulle donc le dispositif électronique 3 traite cette tension et détermine qu'il n'y a pas de sinistres.

En cas de fuite, il y a conduction et donc une tension non nulle est mesurée sur le second élément conducteur 2.

Par conséquent, cette tension non nulle signifie la présence d'un sinistre et le dispositif électronique 3 peut envoyer un signal avec l'information qu'un sinistre est présent. Ce signal peut être envoyé à un module d'alarme avec fonction sonore ou visuelle ou vers un terminal de communication portable.

Astucieusement, le dispositif électronique 3 mesurant la tension au second élément conducteur 2 est capable de localiser ledit sinistre.

Pour cela, le dispositif électronique 3 comprend un module de localisation permettant de localiser le sinistre. Une première réalisation de ce module de localisation consiste à utiliser un diviseur de tension. Cette localisation repose sur le principe du calcul de la résistance des éléments conducteurs 1, 2.

En effet, dans le cas d'une résistance par mètre identique, les éléments conducteurs 1, 2 ont une résistance par mètre telle que pour un élément conducteur avec une résistance par mètre de 200$\Omega$/m, une résistance mesurée de 400 $\Omega$ signifie une longueur de 2m.

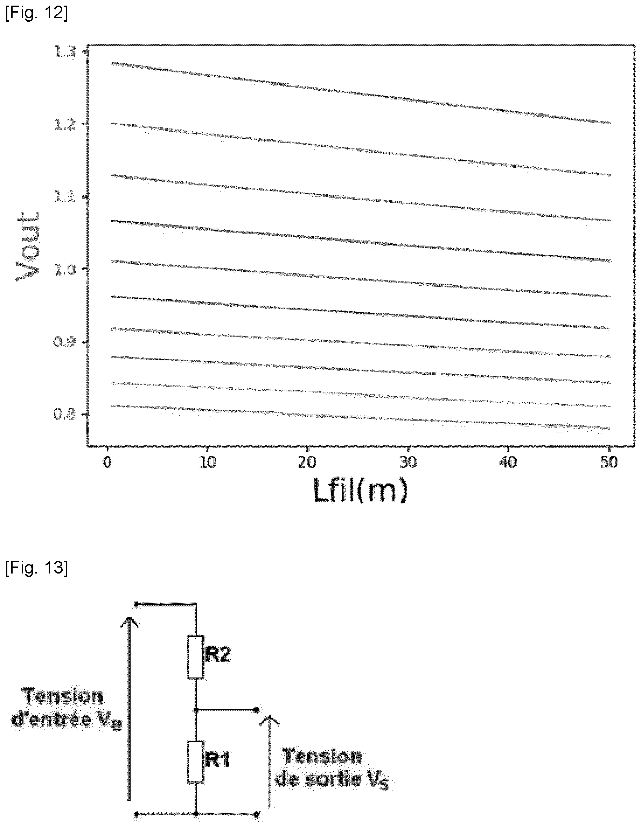

Or, le module diviseur consiste en deux résistances en série : une résistance R2 représentative de la résistance des éléments conducteurs 1, 2 et une résistance connue R1. Comme visible sur la figure 13

Dans cette configuration : R2 = (Ve — Vs) × R1 / Vs avec Ve la tension appliquée au premier élément conducteur, Vs la tension mesurée et R1 la résistance interne.

Ainsi la valeur de la résistance R2 est représentative de la longueur cumulée du premier élément conducteur 1 et du second élément conducteur 2 jusqu'au point de conduction. Comme le premier élément conducteur 1 et le second élément conducteur 2 s'étendent en parallèle, il est nécessaire de diviser le résultat par deux pour déterminer la localisation.

Ainsi, par exemple, pour une valeur de résistance par mètre de 500Ω/m et une valeur mesurée de 2500 Ω/m alors le sinistre est situé à 2.5m, cette valeur étant le résultat du calcul : localisation = (valeur de résistance mesurée / résistance par mètre)/2 soit (2500/500)/2 = 2.5.

Dans le cas de résistance par mètre différente entre les deux conducteurs 1, 2, la localisation se base sur un principe identique. En effet, chaque localisation présente une valeur de résistance spécifique résultant de la résistance du premier élément conducteur 1 additionnée de la résistance du second élément conducteur 2. Le dispositif électronique 3 est alors apte à faire des calculs pour, à partir d'une valeur de résistance mesurée, trouver la localisation.

Bien entendu, d'autres réalisations peuvent être utilisés comme module de localisation. Un pont de Wheastone pour mesurer une variation de résistance ou un montage avec un amplificateur opérationnel en mode transimpédance pour mesurer un courant sur le deuxième élément conducteur 2 sont également utilisables.

Dans une variante, le dispositif électronique 3 est conçu pour incorporer, dans une unité mémoire 31, la géométrie en créneau des éléments conducteurs 1, 2. Cette géométrie intègre également les dimensions du créneau. Cette intégration des dimensions du créneau permet au dispositif électronique 3 de fournir une localisation précise. En effet, en connaissant la géométrie du créneau c'est-à-dire sa largeur et sa hauteur, il est possible à un algorithme de déterminer la localisation précise du sinistre.

Dans ce premier mode de réalisation, il est possible d'adapter le système de détection D. Cette adaptation se fait en modifiant la longueur du support S sur lequel les éléments conducteurs 1, 2 sont agencés. Le motif en créneau permet, pour chaque créneau, d'avoir une longueur et résistance déterminée. Ainsi, il est facile de découper le support S pour choisir le nombre de créneaux souhaités en fonction des besoins et de modifier le dispositif électronique 3 pour s'adapter.

Dans un second mode de réalisation visible à la figure 2, le système de détection D comprend un premier élément conducteur 10 et un second élément conducteur 20. Chaque élément conducteur 10, 20 comprend une portion principale 11, 21 s'étendant parallèlement au plan du sol. A partir de cette portion principale 11, 21, une pluralité de branches secondaires 13, 23 s'étendent. Ces branches 13, 23 s'étendent, de préférence, perpendiculairement à la portion principale 11, 21. Chaque élément conducteur 10, 20 prend ainsi la forme d'un peigne.

Le premier élément conducteur 10 et le second élément conducteur 20 sont agencés pour avoir le même nombre de branches secondaires 13, 23. Ces peignes sont disposés de sorte que les branches secondaires 13 du premier élément conducteur 10 et les branches secondaires 23 du second élément conducteur 20 se fassent face et soient parallèles les unes aux autres. Cela permet d'avoir des couples de branches composés d'une branche secondaire 13 du premier élément conducteur 10 et d'une branche secondaire 23 du second élément conducteur 20. Soit un exemple d'un premier élément conducteur 10 avec une première, une seconde et une troisième branche secondaire 13 et d'un second élément conducteur 20 avec une première, une seconde et une troisième branche secondaire 23. Dans cet exemple, les peignes seront agencés pour que la première branche secondaire 13 du premier élément conducteur 10 soit parallèle à la première branche secondaire 23 du second élément conducteur 20. Cela forme un premier couple de branches. La seconde branche secondaire 13 du premier élément conducteur 10 est parallèle à la seconde branche secondaire 23 du second élément conducteur 20. La troisième branche secondaire 13 du premier élément conducteur 10 est parallèle à la troisième branche secondaire 23 du second élément conducteur 20.

Dans ce second mode de réalisation, la détection d'un sinistre est équivalente à celle du premier mode de réalisation. Ainsi, le premier élément conducteur 10 est alimenté par une tension non nulle via le dispositif électronique 3 alors que le second élément conducteur 20 n'est pas alimenté par une tension, ce second élément conducteur 20 a donc une tension nulle (ou quasi nulle) en temps normal.

En cas de sinistre, l'eau s'infiltre et une conduction électrique se produit entre une branche secondaire 13 du premier élément de conduction 11 et une branche secondaire 23 du second élément de conduction 20 en parallèles l'une de l'autre. Cela entraine l'apparition d'une tension non nulle sur le second élément conducteur 20, cette tension étant détectée par le dispositif électronique 3.

Dans ce second mode de réalisation, la localisation du sinistre utilise une résistance par mètre du premier élément conducteur 10 différente de la résistance par mètre du second élément conducteur 20. Cette résistance par mètre différente permet de mesurer une tension spécifique.

En effet, avec des résistivités différentes et des branches secondaires 13, 23 parallèles les unes aux autres, il existe un risque pour qu'une conduction en une longueur de 10m puisse présenter une résistance égale à une conduction à une distance de 20m. Pour cela, le choix de des résistances par mètre, il est donc nécessaire de respecter la formule, l'inéquation suivante :

$$\rho1 \geq \rho2 \times((D + \Delta L)/(D - \Delta L))$$

Avec p1 la résistance par mètre (Ω/m) du premier élément conducteur, p2 la résistance par mètre (Ω/m) du second élément conducteur, D la hauteur des branches secondaires et ΔL la distance entre deux branches secondaires du même élément conducteur.

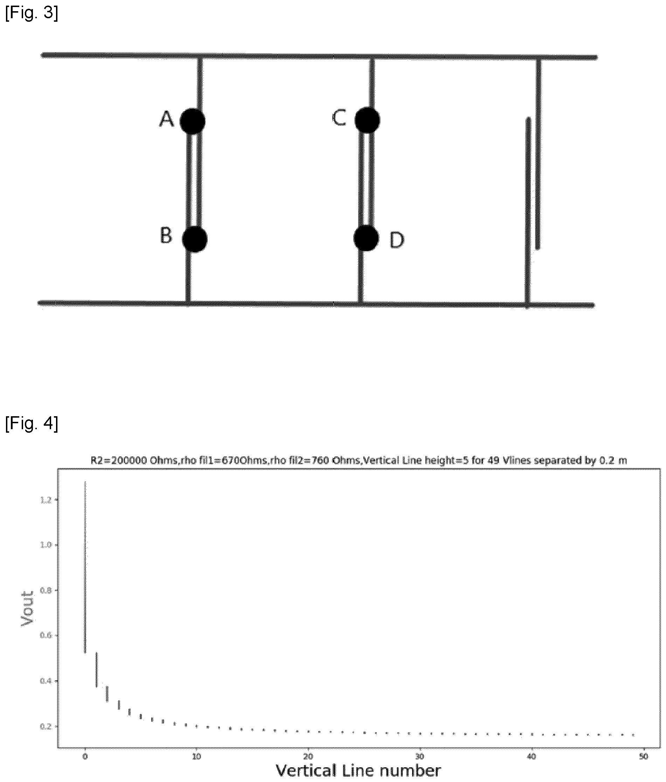

Cette configuration a pour conséquence une gamme de tension spécifique pour chaque couple de branches secondaires 13, 23. Cette gamme de tension est due au fait que chaque couple de branches secondaires 13, 23 présente sa gamme de résistance spécifiques. Sur la figure 3, on peut voir des points de conductions A, B, C et D sur deux couples de branches secondaires 13, 23. Le choix de résistances par mètre différentes permet que la résistance mesurée au point A est différente que celle mesurée au point B et que la résistance mesurée au point B est différente que celle mesurée au point C.

On obtient ainsi le diagramme de tension de la figure 4 qui représente le diagramme de la tension mesurée pour chaque branche secondaire avec un nombre de lignes de 50 et un espacement de 20cm entre chaque branche secondaire. On constate donc que le but est d'avoir des gammes de tension qui ne se chevauchent pas permettent au dispositif électronique 3 de savoir, en fonction de la tension mesurée, quel est le couple de branches 13, 23 qui subit une conduction.

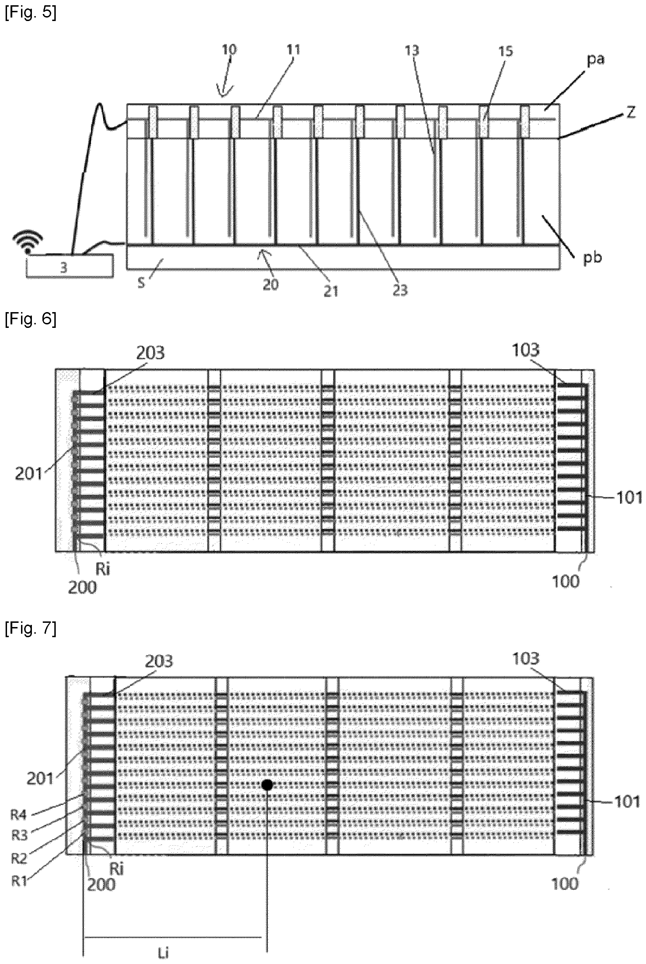

Dans une variante de ce second mode de réalisation visible à la figure 5, les éléments conducteurs 10, 20 sont agencés pour permettre de s'adapter en hauteur. Pour ce faire, le premier élément conducteur 10 est muni de bandes isolantes 15. Ces bandes isolantes 15 sont collées ou fixées sur le support S supportant le premier élément conducteur 10 et ont une forme sensiblement rectangulaire. Ces bandes isolantes 15 sont agencées pour que la longueur de ces bandes 15 s'étende perpendiculairement à la portion principale 11 du premier élément conducteur 10, la largeur des bandes 15 s'étend donc parallèlement à la portion principale 11 du premier élément conducteur 10. Chaque bande isolante 15 comprend ainsi deux côtés opposés s'étendant parallèlement à la portion principale 11 : un coté extérieur et un coté intérieur, le coté intérieur étant le plus proche du second élément conducteur 20. Les bandes isolantes 15 sont ainsi placées afin que les côtés intérieurs des bandes isolantes 15 s'étendent selon le même axe. Ces bandes isolantes 15 sont agencées à proximité de chaque branche secondaire 13 du premier élément conducteur 10, en regard des extrémités des branches secondaires 23 du second élément conducteur 20.

Les bandes isolantes 15 sont dimensionnées pour que la longueur entre la portion principale 11 du premier élément conducteur 10 et le coté intérieur soit identique à la longueur entre l'extrémité des branches secondaires 13 du premier élément conducteur 10 et la portion principale 21 du second élément conducteur 20.

Ces bandes 15 sont utilisées pour faciliter le découpage du support S sur lequel les éléments conducteurs 10, 20 sont agencés. En effet, il peut être nécessaire pour l'opérateur de devoir ajuster en hauteur la taille du système de détection D pour s'adapter à la paroi sur laquelle il sera posé. Il est néanmoins désiré de garder un bon fonctionnement dudit système de détection D.

Pour cela, l'axe passant par les côtés intérieurs des bandes isolantes 15 sert d'axe de découpe Z du support S pour séparer proprement le support S en deux. Une première partie pa porte la portion principale 11 du premier élément conducteur 10 ainsi qu'une fraction des branches secondaires 13 du premier élément. L'autre partie pb porte la totalité du second élément conducteur 20 ainsi que le reste des branches secondaires 13 du premier élément conducteur 10.

Cet agencement permet à l'opérateur d'opérer une seconde découpe au niveau de la seconde partie pb. Cette découpe tend à réduire la longueur des branches secondaires 23 du second élément conducteur 20 et du reste des branches secondaires 13 du premier élément conducteur 10.

Dans une troisième étape, l'opérateur va fixer les deux parties pa, pb l'une avec l'autre par l'intermédiaire de moyens de fixation comme de la colle ou des agrafes ou du ruban adhésif. Cette opération de fixation se fait en ajustant la position des parties pour faire coïncider les fractions des branches secondaires 13 du premier élément conducteur 10 de la première partie pa avec le reste de branches secondaires 13 dudit premier élément conducteur 10. Les bandes isolantes 15 permettent alors d'éviter aux extrémités des branches secondaires 23 du second élément conducteur 20 d'entrer en contact avec le premier élément conducteur 10.

Dans un troisième mode de réalisation visible à la figure 6, le premier élément conducteur 100 et le second élément conducteur 200 se présentent sous forme de peignes. On comprend par-là que le premier élément conducteur 100 et le second élément conducteur 200 comprennent une portion principale 101, 201 à partir de laquelle des branches secondaires 103, 203 s'étendent. Ces branches secondaires 103, 203 s'étendent parallèlement à la portion principale 101, 201. Dans ce troisième mode de réalisation, la portion principale 101, 201 de chaque élément perpendiculairement s'étend perpendiculairement au plan du sol pour être agencée verticalement.

Dans ce troisième mode de réalisation, le second élément conducteur 200 comprend en outre une pluralité de résistances Ri. Ces résistances Ri sont des résistances classiques d'électronique ou être également sous la forme de rubans enduits/imprégnés de noir de carbone pour avoir la bonne résistance électrique. Ces résistances Ri ont une valeur identique et sont agencées, sur la portion principale 201. Le nombre de résistances Ri est tel qu'il y a une résistance associée à chaque branche secondaire 203 du second élément conducteur 200. La première résistance R1 est agencée entre le point du dispositif électronique 3 et la première branche secondaire 203, la plus proche du point de connexion au dispositif électronique 3. Les résistances Ri suivantes sont agencées entre deux branches secondaires 203.

Dans ce troisième mode de réalisation, la résistivité du premier élément conducteur 100 est identique à la résistivité du second élément conducteur 200. En effet, le principe de ce troisième mode de réalisation repose sur une détection en vertical et horizontal basée sur la valeur de résistance mesurée. Comme pour le premier mode de réalisation, un pont diviseur est utilisé pour mesurer une résistance résultante d'une conduction entre une branche secondaire 103 du premier élément conducteur 100 et une branche secondaire 203 du second élément conducteur 200. De ce fait, la tension envoyée par le dispositif électronique 3 dans le premier élément conducteur 100 est transmise au second élément conducteur 200 et mesurée par le dispositif électronique 3. Comme pour le second mode de réalisation, le fait d'avoir des branches secondaires formant un peigne signifie que pour chaque branche du peigne, une gamme de tension et donc de résistance est possible.

Pour que cette détection soit possible, il est nécessaire que l'équation suivante soit résolue :

$$Ri > 2 \times \rho1 \times Lmax$$

Avec Rrésistor qui est la valeur des résistances Ri, p1 la résistance par mètre ($\Omega$/m) des éléments conducteurs et Lmax la distance maximale des branches secondaires de chaque branche secondaire.

Une fois cette équation résolue, il devient possible d'avoir un intervalle spécifique par branche ce qui permet d'éviter les erreurs de position lors d'une détection.

Pour la détection du point de conduction comme visible à la figure 7, le dispositif électronique 3 se base sur un calcul de résistance. En effet, les résistance Ri font office de bornes entre chaque branche du peigne. Par exemple, si les résistances Ri ont une valeur de 100, alors une conduction à la première branche aura une valeur comprise entre 100 et 200 : 100 étant la valeur de la résistance R1 entre la première branche et le dispositif électronique et 200 étant la valeur de la résistance R2 entre la seconde branche et le dispositif électronique 3. Idem, si la résistance mesuré R4 a une valeur comprise entre 400 et 500 alors cela signifie que la conduction à lieu sur la quatrième branche du peigne la plus proche du dispositif électronique 3. Le diagramme de la figure 12 qui montre la tension mesurée en fonction de la longueur des branches secondaires montre bien qu'il n'y a pas de chevauchement entre deux branches secondaires adjacentes.

Ainsi, il est possible de détecter la position en vertical du point de conduction. Pour détecter la position en horizontal, on utilise la valeur p1 de la résistance par mètre ($\Omega$/m) des éléments conducteurs. En effet, la valeur de la résistance mesurée peut se décomposer en deux parties : la première partie qui est un multiple de la valeur Ri qui correspond à la position verticale et une seconde partie qui correspond à la longueur Li entre le point de conduction et la portion principale 201 du second élément conducteur 200. Ainsi, le dispositif électronique 3 est capable de décomposer la valeur de résistance mesurée en une première partie qui est un multiple de la valeur Ri qui correspond à la position verticale et une seconde partie qui correspond à la longueur Li entre le point de conduction et la portion principale du second élément conducteur. Pour cette seconde partie, le dispositif électronique 3 utilise la valeur de la résistivité électrique p1 ($\Omega$/m) des éléments conducteurs. En connaissant cette résistivité électrique et la valeur de la seconde partie de la résistance mesuré, le dispositif électronique 3 est capable de déterminer la distance du point de conduction, cette distance étant représentative de la position horizontale.

Ainsi, le système de détection D selon ce troisième mode de réalisation est capable de localiser précisément une fuite d'eau engendrant une conduction entre le premier élément conducteur 100 et le second élément conducteur 200.

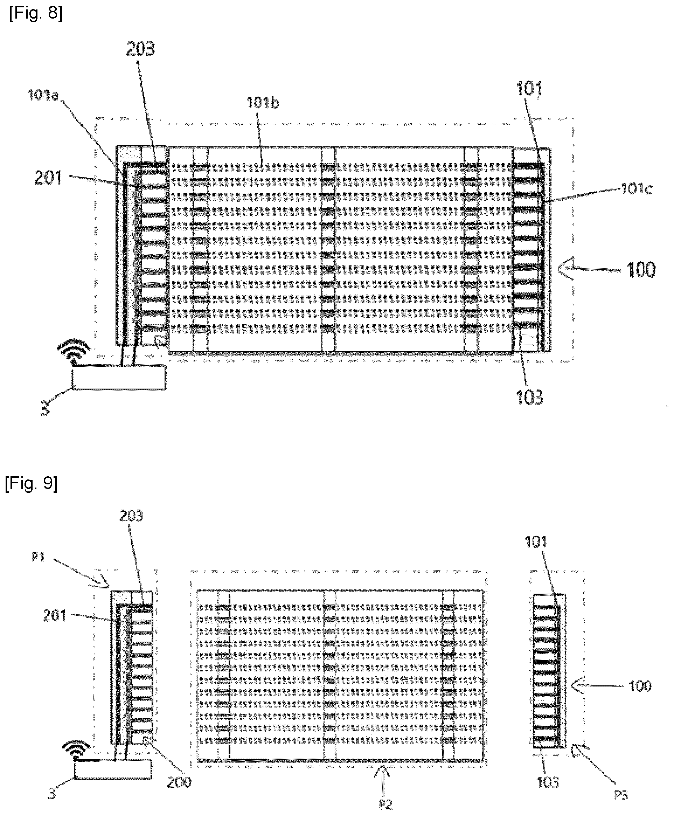

Dans une première variante de ce troisième mode de réalisation visible à la figure 8, les éléments conducteurs 100, 200 sont agencés pour être compacter/rassembler au niveau de la connexion avec le dispositif électronique. En effet, dans le troisième mode de réalisation, la configuration en peigne fait que la portion principale 101 du premier élément conducteur 100 et la portion principale 201 du second élément conducteur 200 sont opposés. Cette configuration oblige donc à avoir une portion principale qui présente une longueur plus élevée pour se connecter au dispositif électronique, idéalement, la portion principale 101 du premier élément conducteur 100 est la portion rallongée.

Pour cette variante, la portion principale 101 du premier élément conducteur 100 est agencée pour comprendre trois segments. Le premier segment 101a est le segment connecté au dispositif électronique 3 qui s'étend parallèlement à la portion principale 201 du second élément connecteur 200, c'est à dire la portion munie des résistances Ri.

Un second segment 101b de ce premier élément conducteur 100 s'étend parallèlement aux branches secondaires 103 du second élément conducteur 200. Préférentiellement, ce second segment s'étend parallèlement à la branche secondaire 203 du second élément conducteur 200 la plus éloignée du dispositif électronique. Astucieusement, ce second segment 101b fait office de branche secondaire 103 du premier élément conducteur 100. Cette branche secondaire 103 est associée à la branche secondaire 203 du second élément conducteur 200 la plus éloignée du dispositif électronique.

Un troisième et dernier segment 101c s'étend parallèlement au premier segment. Ce troisième segment 101c est le segment à partir duquel les autres branches secondaires 103 s'étendent.

Cette configuration est avantageuse car elle permet d'utiliser une branche secondaire 103 du premier élément conducteur 100 pour amener la tension délivrée par le dispositif électronique 3 vers les autres branches secondaires.

Dans une autre variante de ce troisième mode de réalisation visible à la figure 9, le système de détection D est agencé pour que le support S sur lequel les éléments conducteurs sont placés soit adaptable. Pour cela, le support S est divisé en au moins 3 portions : une portion initiale P1, au moins une portion intermédiaire P2 et une portion finale P3.

Dans le cas du troisième mode de réalisation, la portion initiale P1 comporte la portion principale 201 du second élément conducteur 200, incluant les résistances Ri et des fragments des branches secondaires 203 s'étendant depuis cette portion principale 201. La portion finale P3 comprend la portion principale 101 du premier élément conducteur 100 et des fragments des branches secondaires 103 s'étendant depuis cette portion principale 101. Une portion intermédiaire P2 comprend une pluralité de tronçons. Ces tronçons sont des éléments constitutifs des branches secondaires. Ainsi, la moitié des tronçons sont des éléments constitutifs des branches secondaires 103 du premier élément conducteur 100 et l'autre moitié des tronçons sont des éléments constitutifs des branches secondaires 203 du second élément conducteur 200.

Ces tronçons P1, P2, P3 sont agencés pour, lors de l'assemblage de la portion intermédiaire avec une portion intermédiaire et/ou finale et/ou initiale, être alignés avec les tronçons et/ ou fragments de branches secondaires du même élément conducteur. Dans le cas de la première variante du troisième mode de réalisation, la portion initiale P1 comporte la portion principale du second élément conducteur, incluant les résistances Ri et des fragments des branches secondaires s'étendant depuis cette portion principale et le premier segment connecté au dispositif électronique. La portion finale P3 comprend la portion principale du premier élément conducteur et des fragments des branches secondaires s'étendant depuis cette portion principale.

Une portion intermédiaire P2 comprend une pluralité de tronçons. Ces tronçons sont des éléments constitutifs des branches secondaires. Ainsi, la moitié des tronçons sont des éléments constitutifs des branches secondaires du premier élément conducteur et l'autre moitié des tronçons sont des éléments constitutifs des branches secondaires du second élément conducteur. Un des deux tronçons situés aux extrémités hautes et basses de la portion intermédiaire sert de second segment pour le premier élément conducteur. En effet, l'agencement des branches secondaires et la résistivité électrique identique pour les deux éléments conducteurs permet à la portion intermédiaire de ne pas avoir de sens ce qui permet une pose simplifiée.

Ainsi, les tronçons P1, P2, P3 sont agencés pour, lors de l'assemblage de la portion intermédiaire avec une portion intermédiaire et/ou finale et/ou initiale, être alignés avec les tronçons et/ ou fragments de branches secondaires du même élément conducteur.

L'avantage de ce troisième mode de réalisation est qu'il est possible d'ajuster la taille du système de détection dans deux dimensions. En effet, il devient possible de couper les portions intermédiaire et finale et initiale de sorte à diminuer le nombre de branches. Mais il est également possible de couper la ou les portions intermédiaires dans une direction perpendiculaire à celle des branches afin d'ajuster la longueur du système de détection.

Bien entendu, la présente invention ne se limite pas à l'exemple illustré mais est susceptible de diverses variantes et modifications qui apparaîtront à l'homme de l'art. A ce titre, il est également possible que les éléments conducteurs soient agencés directement sur une paroi à équiper. Cette paroi est apte à absorber l'eau de sorte que l'eau puisse permettre une conduction électrique entre les éléments conducteurs.

## Revendications

1. Système de détection (D) de présence d'eau liquide qui comporte un premier (10, 100) et un second (20, 200) élément conducteur, chaque élément conducteur (10, 20, 100, 200) comprenant une portion principale (11, 101) à partir de laquelle au moins deux branches (13, 103) s'étendent, le nombre de branches étant identique entre le premier élément et le second élément conducteur, les éléments conducteurs étant agencés pour que les branches du premier élément conducteur et les branches du second élément conducteur soient parallèles entre elles, **caractérisé en ce que** le premier élément conducteur est alimenté électriquement par un dispositif électronique (3), le dispositif électronique étant apte à mesurer la tension du second conducteur.

2. Système selon la revendication 1, dans lequel le premier élément et le second élément conducteur ont la même résistance par mètre, la portion principale du second conducteur comprenant, entre chaque branche, une résistance Ri.

3. Système selon la revendication 1, dans lequel le premier élément et le second élément conducteur ont une résistance par mètre différente.

4. Système de détection selon la revendication 3, dans lequel la résistance par mètre (p1) du premier élément conducteur et la résistance par mètre (p2) du second élément conducteur ont une valeur telle que l'inéquation suivante est vérifiée :

$$\rho 1 \geq \rho 2 \times ((D + \Delta L)/ (D - \Delta L))$$

Avec ρ1 la résistance par mètre (Ω/m) du premier élément conducteur, ρ2 la résistance par mètre (Ω/m) du second élément conducteur, D la hauteur des branches secondaires et ΔL la distance entre deux branches secondaires du même élément conducteur.

5. Système de détection selon la revendication 2, dans lequel la valeur des résistances Ri résout la formule suivante :

$$Ri > 2 \times \rho 1 \times Lmax$$

Avec ρ1 la résistance par mètre électrique (Ω/m) des éléments conducteurs et Lmax la distance maximale des branches secondaires, ces résistances Ri ayant toutes la même valeur.

6. Système de détection selon la revendication 5, dans lequel la portion principale (101) du premier élément conducteur (100) comprend un premier segment (101a) connecté au dispositif électronique (3) et s'étendant parallèlement à la portion principale (201) du second élément conducteur (200), un second segment (101b) s'étendant parallèlement à la branche secondaire (203) du second élément conducteur (200) la plus éloignée du dispositif électronique et utilisé comme branche secondaire du premier élément conducteur la plus éloignée du dispositif électronique et un troisième segment (101c) s'étendant parallèlement au premier segment, les branches secondaires du premier élément conducteur s'étendant depuis ledit troisième segment.

7. Système selon la revendication 3, dans lequel il comprend des bandes isolantes (15) agencées sur le premier élément conducteur en regard des extrémités des branches secondaires (23) du second élément conducteur (20).

8. Système de détection de sinistres, tels des fuites d'eau, qui comporte un premier (1) et un second (2) élément conducteur s'étendant parallèlement selon une première direction et une seconde direction perpendiculaire à la premier direction, **caractérisé en ce que** le premier élément conducteur est alimenté électriquement par un dispositif électronique (3), le dispositif électronique étant apte à mesurer la tension du second élément conducteur.

9. Système de détection selon l'une des revendications précédentes, dans lequel le premier élément conducteur et le second élément conducteur sont agencés sur un support.

10. Système de détection selon la revendication précédente, dans lequel le support est découpable selon la position et l'agencement du premier et du second élément conducteur.

11. Système de détection selon la revendication précédente, dans lequel ledit support comprend au moins une membrane ou une plaque sur laquelle le premier élément conducteur et le second élément conducteur sont agencés.

12. Système de détection selon la revendication précédente, dans lequel ledit support comprend deux membranes entre lesquelles le premier élément conducteur et le second élément conducteur sont agencés.

13. Système de détection selon la revendication 12, dans lequel au moins une membrane comprend une feuille ou un feuillet de feuilles.

14. Système de détection selon les revendications 11 ou 12, dans lequel chaque membrane comprend une feuille ou un feuillet de feuilles.

15. Système de détection selon l'une des revendications 9 à 12, dans lequel au moins une membrane est perméable à l'eau.

16. Méthode de détection de la présence d'eau liquide dans un bâtiment équipé d'un système de détection (D) selon l'une quelconque des revendications 1 à 15, **caractérisée en ce qu'**elle consiste à détecter une augmentation de potentiel dans le second élément conducteur.

17. Méthode de détection de la présence d'eau liquide dans un bâtiment équipé d'un système de détection selon les revendications 3 ou 8, **caractérisée en ce qu'**elle comprend une étape de localisation consistant à, par l'intermédiaire du dispositif électronique, à déterminer une résistance à partir de la tension mesurée, ledit dispositif électronique étant apte à faire des calculs en utilisant ladite résistance mesurée et la résistance par mètre de chaque élément conducteur pour aboutir à une longueur représentative de la localisation.

18. Méthode de détection d'une fuite d'eau dans un bâtiment équipé d'un système de détection selon l'une quelconque des revendications 2, 5, 6 ou l'une des revendications 9 à 15 dépendantes des revendications 2 ou 5 ou 6, **caractérisée en ce qu'**elle comprend une étape de localisation consistant, par l'intermédiaire du dispositif électronique, à déterminer une résistance à partir de la tension mesurée, cette résistance étant décomposée entre une première partie dont la valeur est égale à un multiple de la valeur de la résistance Ri et une seconde partie dont la valeur dépend de la résistance par mètre des branches secondaires, ledit dispositif électronique étant apte à faire des calculs en utilisant ladite résistance mesurée, la valeur de la résistance Ri et la résistance par mètre de chaque élément conducteur pour aboutir à une longueur représentative de la localisation.

19. Méthode de détection d'une fuite d'eau selon la revendication précédente, dans laquelle la première partie de la résistance issue de la tension mesurée est représentative de la branche secondaire sur laquelle la fuite est détectée, la seconde partie étant représentative de la position sur la branche secondaire.

20. Programme d'ordinateur comportant des instructions pour l'exécution de tout ou partie des étapes d'une méthode selon l'une quelconque des revendications 16 à 19 lorsque ledit programme est exécuté par un ordinateur.

[Fig. 1]

[Fig. 2]

[Fig. 3]

[Fig. 4]

R2=200000 Ohms,rho fil1=670Ohms,rho fil2=760 Ohms,Vertical Line height=5 for 49 Vlines separated by 0.2 m

[Fig. 5]

[Fig. 6]

[Fig. 7]

[Fig. 8]

[Fig. 9]

[Fig. 10]

[Fig. 11]

[Fig. 12]

[Fig. 13]